# EUROPÄISCHE PATENTSCHRIFT

(11) **EP 0 688 796 B1**
(45) Veröffentlichungstag und Bekanntmachung des Hinweises auf die Patenterteilung: **09.09.1998**
(21) Anmeldenummer: 95109417.6
(22) Anmeldetag: 19.06.1995
(51) Int. Cl.: C08F 8/30, C10L 1/22, C10L 1/18, C10L 1/14

(54) **Umsetzungsprodukte von Polyetheraminen mit Polymeren alpha, beta-ungesättigter Dicarbonsäuren**
Reaction products of polyetheramines with polymers of alpha, beta- unsaturated dicarboxylic acids
Produits de réaction de polyétheramines avec des polymères d'acides dicarboxyliques alpha-, bêta-insaturés

(30) Priorität: 24.06.1994 DE 4422159
(43) Veröffentlichungstag der Anmeldung: 27.12.1995
(73) Patentinhaber: Clariant GmbH, 65929 Frankfurt am Main (DE)
(72) Erfinder: Krull, Matthias, Dr., D-46147 Oberhausen (DE); Feustel, Michael, Dr., D-55278 Köngernheim (DE); Mielcke, Erdmann, D-65812 Bad Soden (DE)

(56) Entgegenhaltungen:
- EP-A- 0 324 547
- EP-A- 0 401 627
- EP-A- 0 561 722
- EP-A- 0 606 055
- EP-A- 0 634 424
- WO-A-93/08243
- BE-A- 641 724
- FR-A- 1 313 191
- FR-A- 2 592 387
- FR-A- 2 613 371
- US-A- 3 216 941
- US-A- 3 520 852

## Beschreibung

Mineralöle und Mineralöldestillate, wie Dieselkraftstoff oder Heizöl, enthalten in der Regel einen Anteil an gelösten n-Paraffinen, die bei Erniedrigung der Temperatur auskristallisieren und dadurch zur Verschlechterung der Fließeigenschaften dieser Öle bzw. Destillate führen können. Bei Mineralölen kann dies beim Transport durch Rohrleitungen zu Ablagerungen an der Wand, in besonderen Fällen (z.B. bei Stillstand einer Pipeline) sogar zu deren völligen Verstopfung führen. Auch bei der Lagerung und Weiterverarbeitung der Mineralöle können Ausfällungen von Paraffinen zu Komplikationen führen. Bei Mineralöldestillaten können als Folge der Kristallisation Verstopfungen der Filter in Dieselmotoren und Feuerungsanlagen auftreten.

Außer den klassischen Methoden der Beseitigung dieser Paraffinprobleme (thermisch, mechanisch oder mit Lösungsmitteln), die sich lediglich auf die Entfernung der bereits gebildeten Ausfällungen beziehen, wurden in den letzten Jahren eine Reihe von chemischen Additiven (Kaltfließverbesserer, Paraffininhibitoren) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffinkristallen mit veränderter Kristallform resultiert. Mit Additiven versetzte Öle lassen sich noch bei Temperaturen pumpen bzw. verarbeiten, die oft mehr als 20°C tiefer liegen als bei nicht additivierten Ölen.

Ein weiterer Effekt der Kaltfließverbesserer wird durch eine Dispergierung der Kristalle erklärt. So verhindern Paraffindispergatoren das Sedimentieren der Kristalle und damit die Bildung einer paraffinreichen Schicht am Boden des Lagerbehälters .

Die europäische Patentanmeldung Nr. EP-A-0 606 055 betrifft Terpolymere auf Basis von α,β-ungesättigten Dicarbonsäureanhydriden, α,β-ungesättigten Verbindungen und Polyoxyalkylenethern, von niederen, ungesättigten Alkoholen, sowie deren Verwendung als Paraffininhibitoren für paraffinhaltige Erdölprodukte.

In EP-A-0 154 177 werden Umsetzungsprodukte von Copolymeren auf Basis von Maleinsäureanhydrid und α,β-ungesättigten Verbindungen mit primären Monoalkylaminen und/oder aliphatischen Alkoholen beschrieben. Diese Copolymeren sind besonders als Paraffininhibitoren für paraffinhaltige Erdölprodukte, beispielsweise Rohöle und Destillationsrückstände der Erdölverarbeitung, geeignet.

Aus EP-A-0 436 151 sind Umsetzungsprodukte von Copolymeren auf Basis von Maleinsäureanhydrid und α,β-ungesättigten Verbindungen mit Dialkylaminen bekannt. Diese Copolymeren werden Erdölmitteldestillaten in Mengen von 50 bis 1000 ppm zugesetzt. Derartige Erdölmitteldestillate enthalten in der Regel bereits Fließverbesserer, wie Ethylen-Vinylester-Copolymere.

EP-A-0 283 293 offenbart Copolymere abgeleitet aus der Polymerisation eines aliphatischen Olefins mit Maleinsäureanhydrid, wobei das Copolymer sowohl eine Ester- als auch eine Amidgruppe aufweisen muß, von denen jede eine Alkylgruppe mit mindestens 10 Kohlenstoffatomen enthält sowie Copolymere von der Umsetzung eines sekundären Amins mit einem Polymer, das Anhydridgruppen enthält, wobei aus den Anhydridgruppen zu gleichen Teilen Amide bzw. Aminsalze hergestellt werden.

EP-A-0 523 672 betrifft Copolymere aus ethylenisch ungesättigten Carbonsäureestern mit Polyoxyalkylenethern von niederen, ungesättigten Alkoholen sowie deren Verwendung in paraffinhaltigen Ölen, wie Rohölen, Rückstandsölen und Öldestillaten.

EP-A-0 405 893 offenbart einen Schmierstoff enthaltend ein Ethylen-Olefin-Copolymer gepfropft mit Maleinsäureanhydrid und umgesetzt mit Alkylen- oder Oxyalkylenamin mit mindestens zwei primären Aminogruppen sowie einem Alkenylbernsteinsäureanhydrid.

US-A-4 632 769 betrifft ein Ethylen-Olefin-Copolymer gepfropft mit Maleinsäureanhydrid und umgesetzt mit Alkylen- oder Oxyalkylenamin mit mindestens zwei Aminogruppen und seine Verwendung als Viskositätsindexverbesserer in Schmierölen sowie als Additiv in Brennölen.

WO 8700857 und WO 8700856 offenbaren Umsetzungsprodukte von Alkenylbernsteinsäureanhydriden mit Polyetheraminen als scherstabile Verdicker für wasserbasische Schmiermittel und Hydraulikflüssigkeiten.

In EP-A-310 875 ist die Verwendung von Polyetheraminen als Kraftstoffadditive für Otto-Motoren zur Reinigung von Ventilen und Vergaser beschrieben.

Die paraffininhibierende und -dispergierende Wirkung der bekannten Kaltfließverbesserer, insbesondere bei Mitteldestillaten ist jedoch nicht ausreichend, so daß sich bei Abkühlung teilweise große Paraffinkristalle bilden können, die aufgrund ihrer höheren Dichte im Laufe der Zeit sedimentieren und zu einer paraffinreichen Schicht am Boden und einer paraffinarmen oberen Schicht führen können.

Es wurde nun gefunden, daß durch Zugabe von Umsetzungsprodukten von Polyetheraminen mit Polymeren enthaltend Dicarbonsäureanhydridgruppen zu Mineralöldestillaten, die mit Fließverbesserern auf Basis von Ethylen-Vinylester-Copolymerisaten versetzt sind, die bei Abkühlung ausfallenden Paraffinkristalle dispergiert bleiben.

Infolge dieser gleichmäßigen Dispergierung wird eine homogen trübe Phase erhalten, bei der der für die "operability" entscheidende CFPP (Cold Filter Plugging Point)-Wert von oberer und unterer Phase annähernd gleich ist.

Gegenstand der Erfindung sind Umsetzungsprodukte von Polyetheraminen mit Polymeren enthaltend Dicarbonsäureanhydridgruppen, dadurch gekennzeichnet, daß sie 20 - 80, bevorzugt 40 - 60 Mol.-% an bivalenten Struktureinheiten A und/oder C und gegebenenfalls B 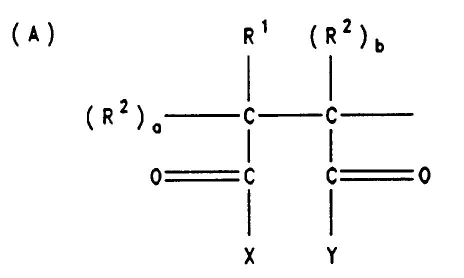 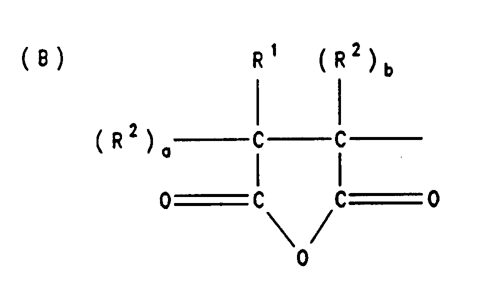 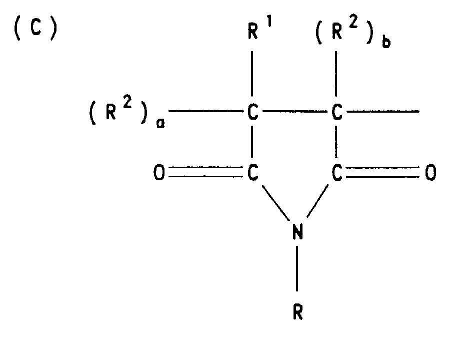 wobei
- R¹ und R²: unabhängig voneinander Wasserstoff, Methyl oder Methylen,
- a, b: gleich Null oder Eins und a + b gleich Eins,
- X und Y: unabhängig voneinander -OH, -O-C₁₋₃₀-Alkyl, NR³R⁴, oder -O^{⊖}N^{⊕} R³R⁴
- R³ und R⁴: unabhängig voneinander Wasserstoff, C₆-C₄₀-Alkyl oder R,
- R: die Bedeutung von 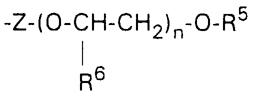 hat, mit der Maßgabe, daß mindestens 1 mol-% der polymergebundenen Säureanhydridgruppen mit einem Polyetheramin der Formel H umgesetzt ist, 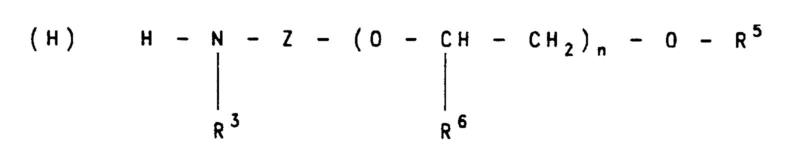
- Z: C₂-C₄-Alkylen,
- n: eine Zahl zwischen 1 und 1000,
- R⁵: C₁-C₃₀-Alkyl, C₅-C₁₂-Cycloalkyl oder C₆-C₃₀-Aryl, und
- R⁶: Wasserstoff, C₁-C₄-Alkyl, bevorzugt Methyl,
bedeuten, und
80 - 20 Mol.-%, bevorzugt 60 - 40 Mol.-% an bivalenten Struktureinheiten D 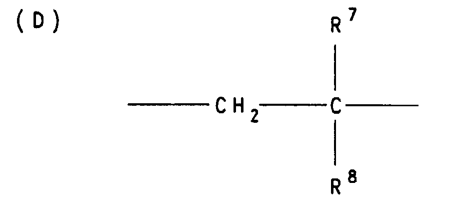 worin
- R⁷ =: Wasserstoff oder C₁-C₄-Alkyl ist und
- R⁸ =: C₁-C₆₀-Alkyl oder C₆-C₁₈-Aryl bedeutet, enthalten.

Die vorgenannten Alkyl-, Cycloalkyl- und Arylreste können gegebenenfalls substituiert sein. Geeignete Substituenten sind beispielsweise (C₁-C₆)-Alkyl, Halogene, wie Fluor, Chlor, Brom und Jod, bevorzugt Chlor, und (C₁-C₆)-Alkoxy.

Alkyl steht erfindungsgemäß im allgemeinen für einen geradkettigen oder verzweigten Kohlenwasserstoffrest mit 1 - 30, bevorzugt 10 - 24 Kohlenstoffatomen. Im einzelnen seien genannt: n-Butyl, tert.-Butyl, n-Hexyl, n-Octyl, Decyl, Dodecyl, Tetradecyl, Hexadecyl, Octadecyl, Dodecenyl, Tetrapropenyl, Tetradecenyl, Pentapropenyl, Hexadecenyl, Octadecenyl und Eicosanyl oder Mischungen, wie Cocosfettalkyl, Talgfettalkyl und Behenyl.

Cycloalkyl steht erfindungsgemäß im allgemeinen für einen cyclischen aliphatischen Rest mit 5 - 20 Kohlenstoffatomen. Bevorzugte Cycloalkylreste sind Cyclopentyl und Cyclohexyl.

Die erfindungsgemäßen Umsetzungsprodukte enthalten die bivalenten Struktureinheiten A, C und D und gegebenenfalls B.

Im einzelnen leiten sich die Struktureinheiten A, B und C von α,β-ungesättigten Dicarbonsäureanhydriden der allgemeinen Formel E und/oder F 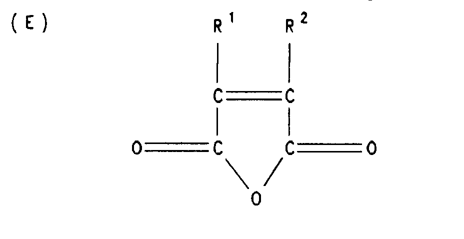 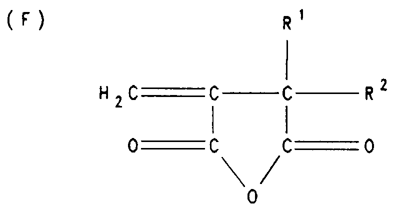 wie Maleinsäureanhydrid, Itaconsäureanhydrid, Citraconsäureanhydrid, bevorzugt Maleinsäureanhydrid, ab.

Die Struktureinheiten D leiten sich von den α,β-ungesättigten Olefinen der allgemeinen Formel G ab.

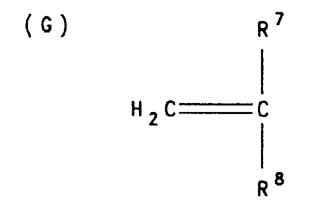

Beispielhaft seien die folgenden α,β-ungesättigten Olefine genannt: Styrol, α-Methylstyrol, Dimethylstyrol, α-Ethylstyrol, Diethylstyrol, i-Propylstyrol, tert.-Butylstyrol, Diisobutylen und α-Olefine, wie Decen, Dodecen, Tetradecen, Pentadecen, Hexadecen, Octadecen, C₂₀-α-Olefin, C₂₄-α-Olefin, C₃₀-a-Olefin, Tripropenyl, Tetrapropenyl, Pentapropenyl sowie deren Mischungen. Bevorzugt sind α-Olefine mit 10 bis 24 C-Atomen und Styrol, besonders bevorzugt sind α-Olefine mit 12 bis 20 C-Atomen.

Die Reste NRR³ (Struktureinheit A) bzw. NR (Struktureinheit C) leiten sich von Polyetheraminen der allgemeinen Formel (H) ab 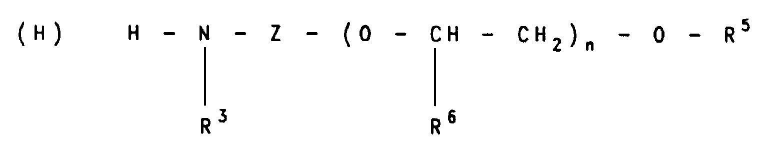 worin die Reste Z, R³, R⁵, R⁶ und n die vorstehend genannten Bedeutungen haben.

Der Rest X leitet sich von den Umsetzungsprodukten der Dicarbonsäureanhydridgruppen mit Alkoholen der Formel HO-(C₁-C₃₀)-Alkyl und/oder Aminen der Formel HNR³R⁴ ab.

Als primäre Amine seien beispielsweise die folgenden genannt: n-Hexylamin, n-Octylamin, n-Tetradecylamin, n-Hexadecylamin, n-Stearylamin oder auch N,N-Dimethylaminopropylendiamin, Cyclohexylamin, Dehydroabietylamin sowie deren Mischungen.

Als sekundäre Amine seien beispielsweise genannt: Didecylamin, Ditetradecylamin, Distearylamin, Dicocosfettamin, Ditalgfettamin und deren Mischungen.

Als Alkohole seien beispielsweise genannt: Methanol, Ethanol, Propanol, Isopropanol, n-, sek.-, tert.-Butanol, Octanol, Tetradecanol, Hexadecanol, Octadecanol, Talgfettalkohol, Behenylalkohol und deren Mischungen.

Bei dem Monomer der Formel H gibt der Index n den Alkoxylierungsgrad, d.h. die Anzahl der Oxalkylgruppen an, die pro Mol angelagert werden.

Alternierende Polymerisate aus Maleinsäureanhydrid (MSA) und α,ß-ungesättigten Olefinen sind an sich bekannt (Houben-Weyl, E20 (1987) S. 1239 ff.). Die Polymeren können beispielsweise, wie in US-A-4526950 beschrieben, durch Copolymerisation von MSA und Olefinen, gegebenenfalls in Gegenwart von inerten Lösemitteln, in Gegenwart von Radikalkettenstartern hergestellt werden.

Die eingesetzten Polyetheramine sind bekannt. Ihre Herstellung ist beispielsweise durch reduktive Aminierung von Polyglykolen möglich. Des weiteren gelingt die Herstellung von Polyetheraminen mit einer primären Aminogruppe durch Addition von Polyglykolen an Acrylnitril und anschließende katalytische Hydrierung. Darüber hinaus sind Polyetheramine durch Umsetzung von Polyethern mit Phosgen bzw. Thionylchlorid und anschließende Aminierung zum Polyetheramin zugänglich. Die erfindungsgemäß eingesetzten Polyetheramine sind (z.B.) unter der Bezeichnung ®Jeffamine (Texaco) kommerziell erhältlich. Ihr Molekulargewicht beträgt bis zu 2000 g/mol und das Ethylenoxid-/Propylenoxid-Verhältnis beträgt von 1:10 bis 6:1.

Ebenfalls Gegenstand der Erfindung ist ein Verfahren zur Herstellung der erfindungsgemäßen Umsetzungsprodukte, das dadurch gekennzeichnet ist, daß man zunächst Monomere der allgemeinen Formel E und/oder F mit einem Monomeren der allgemeinen Formel G polymerisiert und anschließend mit einem Polyetheramin der Formel H umsetzt.

Die Polymerisation erfolgt nach bekannten, diskontinuierlichen oder kontinuierlichen Polymerisationsverfahren, wie Masse-, Suspensions-, Fällungs-oder Lösungspolymerisation und Initiierung mit geeigneten Radikalkettenstartern, z.B. Hydroperoxide, Peroxide oder Azoverbindungen, wie Dilauroylperoxid, Dibenzoylperoxid, t-Butylperpivalat, t-Butylpermaleinat, t-butylperbenzoat, Dicumylperoxid, t-Butylcumylperoxid, Di-t-butyl-peroxid, Cumolhydroperoxid, t-Butylhydroperoxid, 2,2'-Azo-bis(2-methylpropanonitril), 2, 2'-Azo-bis(2-methylbutyronitril) und Mischungen untereinander.
Im allgemeinen werden diese Initiatoren in Mengen von 0,1 bis 20 Gew.-%, vorzugsweise 0,2 bis 10 Gew.-%, berechnet auf die Monomeren, eingesetzt.

Die Polymerisation erfolgt in der Regel bei Temperaturen von 40 - 400°C, vorzugsweise 80 - 250°C, wobei bei Verwendung von α,β-ungesättigten Olefinen oder Lösungsmitteln mit Siedetemperaturen unterhalb der Polymerisationstemperatur, zweckmäßigerweise unter Druck, gearbeitet wird. Die Polymerisation wird üblicherweise unter Luftausschluß, z.B. unter Stickstoff durchgeführt, da Sauerstoff die Polymerisation stört. Bei der Wahl des Initiators bzw. des Initiatorsystems ist es zweckmäßig, darauf zu achten, daß die Halbwertzeit des Initiators oder des Initiatorsystems bei der gewählten Polymerisationstemperatur weniger als 3 Stunden beträgt.

Zur Erzielung niedermolekularer Polymere ist es oftmals zweckmäßig, in Gegenwart von an sich bekannten Reglern zu arbeiten. Geeignete Regler sind beispielsweise organische Mercapto-Verbindungen, wie 2-Mercapto-ethanol, 2-Mercapto-propanol, Mercapto-essigsäure, Mercapto-propionsäure, tert.-Butylmercaptan, n-Butylmercaptan, n-Octylmercaptan, n-Dodecylmercaptan und tert.-Dodecylmercaptan, die im allgemeinen in Mengen von 0,1 Gew.-% bis 10 Gew.-% eingesetzt werden.

Für die Polymerisation geeignete Apparaturen sind z.B. übliche Rührkessel mit beispielsweise Anker-, Blatt-, Impeller- oder Mehrstufenimpuls-Gegenstrom-Rührer und für die kontinuierliche Herstellung Rührkesselkaskaden, Rohrreaktoren oder statische Mischer.

Bevorzugtes Verfahren zur Herstellung der Polymeren ist die Lösungspolymerisation. Sie wird in Lösungsmitteln durchgeführt, in denen die Monomeren und das gebildete Polymer löslich sind. Es sind hierfür alle Lösungsmittel geeignet, die diese Anforderungen erfüllen und die mit den Monomeren sowie den gebildeten Polymeren keine Reaktion eingehen. Beispielsweise sind dies organische, bevorzugt aromatische und/oder aliphatische Lösemittel, wie Cumol, Toluol, Xylol, Ethylbenzol, Decan, Pentadecan oder auch kommerzielle Lösemittelgemische, wie ®Solvent Naphtha, ®Shellsol AB oder ®Solvesso 150, ®Solvesso 200, ®Solvesso 250, ®EXXSOL, ®ISOPAR- und ^{®}Shellsol D-Typen.

Bei der Herstellung können alle Monomeren vorgelegt und durch Zugabe eines Radikalkettenstarters und unter Wärmezufuhr polymerisiert werden. Zweckmäßigerweise wird jedoch das Lösungsmittel und ein Teil der Monomeren (z.B. ca. 5 - 20 Gew.-%) vorgelegt und der Rest der Monomerenmischung mit dem Initiator und gegebenenfalls Co-Initiator und Regler zudosiert.

Bevorzugt werden auch Lösungsmittel und das α,β-ungesättigte Olefin der Formel G im Polymerisationsreaktor vorgelegt und nach Erreichen der Polymersiationstemperatur das säureanhydridgruppenhaltige Monomer der Formel E und/oder F, gegebenenfalls gelöst im Lösungsmittel, und der Initiator sowie gegebenenfalls Co-Initiator und Regler zudosiert.

Die Konzentration der zu polymerisierenden Monomeren beträgt zwischen 20 und 95 Gew.-%, bevorzugt 50 und 90 Gew.-%.

Das bei der vorstehend beschriebenen Polymerisation von α,β-ungesättigtem Dicarbonsäureanhydrid und α,β-ungesättigtem Olefin erhaltene Copolymer kann durch Verdampfen des Lösungsmittels isoliert werden.
Vorzugsweise wird jedoch für die Polymerisation ein Lösungsmittel gewählt, in dem die nachfolgende Umsetzung mit Polyetheramin und/oder Alkanolamin erfolgen kann. In der Regel ist es von Vorteil, die Anhydride der Dicarbonsäuren und nicht die freien Säuren für die Polymerisation einzusetzen, da diese besser mit Olefinen reagieren und anschließend selektiv mit Polyetheramin und/oder Alkanolamin umgesetzt werden können. Der Einsatz der entsprechenden Dicarbonsäuren ist jedoch nicht auszuschließen.

Nach der Polymerisation erfolgt die Umsetzung mit Polyetheraminen der allgemeinen Formel H.

Die Herstellung der erfindungsgemäßen Umsetzungsprodukte durch Reaktion des vorstehend beschriebenen Polymeren mit Polyetheramin der Formel H erfolgt bei Temperaturen zwischen 50 bis 250°C, bevorzugt bei 60 bis 200°C. Während bei Temperaturen unterhalb 100°C bevorzugt Amide gebildet werden, entstehen aus primären Aminen bei höheren Temperaturen bevorzugt Imide.

Das Polyetheramin wird dabei in Mengen von ungefähr 0,01 bis 2 Mol pro Mol einpolymerisiertem Dicarbonsäureanhydrid angewandt. Die Verwendung größerer Mengen ist möglich, bringt aber keinen Vorteil.

Werden 2 Mol eines sekundären Amins der Formel H eingesetzt, erhält man bei niedrigen Reaktionstemperaturen (30 - 120°C) Amid-Ammoniumsalze. Die Bildung einer zweiten Amidgruppierung erfordert Temperaturen oberhalb 120°C, längere Verweilzeiten und Wasserauskreisen. Werden geringere Mengen als 1 Mol des sekundären Amins angewandt, findet keine vollständige Umsetzung zum Monoamid statt.

Je nach Reaktionsbedingungen entstehen also Halbamide, Imide und/oder Diamide. Bei weniger als äquimolarer Zugabe von Polyetheramin, bezogen auf die Dicarbonsäureanhydridgruppen, können verbleibende Säuregruppen durch Umsetzung mit Alkoholen verestert werden. Im Falle der Bildung von Halbamiden kann die verbleibende Säuregruppe mit einem Fettalkohol verestert oder mit einem Amin neutralisiert werden.

Bevorzugt wird das Polymer enthaltend Struktureinheiten abgeleitet von einem α,β-ungesättigtem Dicarbonsäureamid und einem α,β-ungesättigten Olefin, gegebenenfalls gelöst in einem inerten Lösemittel, vorgelegt und das Polyetheramin zudosiert. Es können jedoch auch alle Edukte bei Raumtemperatur gemischt werden und durch Erhöhung der Temperatur zur Reaktion gebracht werden. Geeignete Lösemittel sind organische, bevorzugt aromatische Lösemittel, wie Toluol, Xylol und hochsiedende Lösemittelgemische, wie ^{®}Shellsol AB.

In einer weiteren Variante ist es möglich, die erfindungsgemäßen Umsetzungsprodukte durch Reaktion der Monomeren der Formel E und/oder F mit Polyetheramin der Formel H und nachfolgender Polymerisation mit Monomeren der Formel G herzustellen.
Hierzu werden die Monomeren der Formel E und/oder F zusammen mit dem Polyetheramin der Formel H in einem geeigneten Lösungsmittel vorgelegt und auf eine Temperatur unterhalb 100°C erwärmt. Anschließend wird das Halbamid wie vorstehend beschrieben polymerisiert. Bevorzugt erfolgt die Polymerisation in Lösung.

Es hat sich gezeigt, daß die erfindungsgemäßen Umsetzungsprodukte in Mischungen mit Ethylen-Vinylester-Copolymeren ausgezeichnete Wirkung als Paraffindispergatoren in paraffinhaltigen Mitteldestillaten besitzen und zu einer weiteren Absenkung des (Cold Filter Plugging Point) CFPP führen. Die in den Mitteldestillaten enthaltenen Paraffine können hierbei geradkettig oder verzweigte Alkane mit etwa 10 - 50 Kohlenstoffatomen sein. Üblicherweise bestehen diese Mischungen aus 10 bis 1000 ppm, bevorzugt 50 bis 500 ppm der erfindungsgemäßen Umsetzungsprodukte und 1 bis 10000 ppm, bevorzugt 50 bis 1000 ppm an Ethylen-Vinylester-Copolymeren. Neben diesen Ethylen-Vinylester-Copolymeren kommen auch Copolymere in Betracht, die weitere geeignete Struktureinheiten aufweisen. Die erfindungsgemäßen Copolymeren und Ethylen-Vinylester-Copolymeren können auch als Einzelstoffe den Mitteldestillaten, die eine dieser Komponenten bereits enthalten, zugesetzt werden.

Geeignete Vinylestermonomere sind C₁-C₂₀-Alkylvinylester, bevorzugt C₁-C₁₂-Alkylvinylester, z.B. Vinylacetat, Vinylpropionat, Neononansäurevinylester und Neodecansäurevinylester sowie Vinylester von gesättigten C₁₀-C₂₄-Fettsäuren. Weitere geeignete Ethylenmonomere sind Ester ungesättigter Carbonsäuren, bevorzugt die C₁-C₂₄-Alkylester der Acrylsäure, Methacrylsäure und Fumarsäure sowie Diisobutylen.

Derartige Ethylen-Vinylester-Copolymere (bzw. Terpolymere) sind in der Patentliteratur eingehend beschrieben. Beispielsweise seien die DE-B-11 47 799 (Ethylen/Vinylacetat), DE-A-32 47 753 (Ethylen/Alkencarbonsäureester, Carbonsäurevinylester/Vinylketone), US-A-4 015 063 (Ethylen, Dimethyvinylcarbinol, Fettsäurevinylester), EP-A-203 554 (Ethylen/Diisobutylen/Vinylacetat), EP-A-309 897 (Ethylen/Methoxyessigsäurevinylester) und DE-A-40 42 206 (Ethylen/Vinylacetat/Neononan- oder Neodecansäurevinylester) angeführt.

Bevorzugte Ethylen-Vinylester-Copolymerisate sind solche, die im wesentlichen
80 - 51 Gew.-% Ethylen und
20 - 49 Gew.-% Vinylacetat oder Vinylpropionat enthalten.
Bevorzugte Ethylen-Vinylester-Terpolymerisate enthalten neben
79 - 40 Gew.-% Ethylen,
20 - 35 Gew.-%, bevorzugt 1 - 15 Gew.-% Vinylacetat oder Vinylpropionat, und
1 - 25 Gew.-%, bevorzugt 1 - 15 Gew.-% Diisobutylen,
Neononansäurevinylester oder Neodecansäurevinylester.

Des weiteren hat sich gezeigt, daß Mischungen aus den erfindungsgemäßen Umsetzungsprodukten, den vorstehend beschriebenen Ethylen-Vinylester-Copolymeren und bestimmten quartären Ammoniumsalzen ausgezeichnete Wirkung als Paraffindispergatoren in Mitteldestillaten besitzen.

Geeignete quartäre Ammoniumsalze besitzen die allgemeine Formel

^{⊕}N(R¹¹)₄ U^{⊖}

wobei R¹¹ gleich oder verschieden ist und für C₁-C₃₀-Alkyl, bevorzugt C₁-C₂₂-Alkyl, C₁-C₃₀-Alkenyl, bevorzugt C₁-C₂₂-Alkenyl, Benzyl oder einen Rest der Formel -(CH₂-CH₂-O)ₙ-R¹² steht, wobei R¹² Wasserstoff oder ein Fettsäurerest der Formel C(O)-R¹³ ist, mit R¹³ C₆-C₄₀-Alkyl oder C₆-C₄₀-Alkenyl, n eine Zahl von 1 bis 30 und U für Halogen, bevorzugt Chlor oder Methosulfat steht.

Beispielhaft für derartige quartäre Ammoniumsalze seien genannt:
Dihexadecyl-dimethylammoniumchlorid, Distearyl-dimethylammoniumchlorid, Quaternisierungsprodukte von Estern des Di- und Triethanolamins mit langkettigen Fettsäuren (Laurinsäure, Myristinsäure, Palmitinsäure, Stearinsäure, Behensäure, Ölsäure und Fettsäuremischungen, wie Cocosfettsäure, Talgfettsäure, hydrierte Talgfettsäure, Tallölfettsäure), wie N-Methyl-triethanolammonium-distearylester-chlorid, N-Methyl-triethanolammonium-distearylester-methosulfat, N,N-Dimethyl-diethanolammonium-distearylester-chlorid, N-Methyl-triethanolammonium-dioleylester-chlorid, N-Methyl-triethanolammonium-triaurylester-methosulfat, N-Methyl-triethanolammonium-tristearylester-methosulfat und deren Mischungen.

Üblicherweise bestehen die Mischungen aus den erfindungsgemäßen Umsetzungsprodukten, Ethylen-Vinylester-Copolymeren und quartären Ammoniumsalzen aus 10 bis 1000 ppm, bevorzugt 50 bis 500 ppm der erfindungsgemäßen Umsetzungsprodukten, 10 bis 10000 ppm, bevorzugt 50 bis 1000 ppm an Ethylen-Vinylester-Copolymeren und 10 bis 1000 ppm, bevorzugt 50 bis 500 ppm der quartären Ammoniumsalze.

Die erfindungsgemäßen Umsetzungsprodukte sowie die vorstehend beschriebenen Mischungen verbessern das Tieftemperaturverhalten dieser Öle und bewirken hiermit ein gegenüber dem Stand der Technik verbessertes Fließverhalten. Insbesondere werden der CFPP und die Paraffindispergierung verbessert.

Das Kaltfließverhalten wird durch den CFPP-Test gemäß EN 116 (Europanorm) gemessen.

Die Paraffindispergierung in Mitteldestillaten kann nachgewiesen werden durch Lagerung der additivierten Ölproben im Kälteschrank bei Temperaturen zwischen -13 und -20°C (Durchführung nach M. Feustel et al., Erdöl, Kohle, Erdgas & Petrochemie, Bd. 43, S. 396, Fig. 2 (1990)) mit anschließender optischer Beurteilung des Sedimentationsverhaltens sowie Auftrennung des Ölmusters in eine obere und eine untere Phase des CFPP-Wertes (EN 116).

### Beispiele

Bei den eingesetzten Polyetheraminen handelt es sich um kommerzielle Produkte der Firma Texaco (®Jeffamine) der allgemeinen Formel CH₃O-[CH₂CH(R)O]ₙ-CH₂CH(CH₃)-NH₂ mit folgenden Spezifikationen: (Wenn R = H bedeutet die eckige Klammer EO; Wenn R =CH₃ bedeutet die eckige Klammer PO)

| Polyetheramin | EO/PO | MW |
|---|---|---|
| ®Jeffamine M-600 | 1 : 9 | 600 |
| ®Jeffamine M-715 | 13 : 2 | 715 |
| ®Jeffamine M-1000 | 19 : 3 | 1000 |
| ®Jeffamine M-2005 | 3 : 32 | 2000 |
| ®Jeffamine M-2070 | 32 : 10 | 2000 |

| | | |
|---|---|---|
| ®Shellsol AB und ®Solvent Naphtha sind kommerzielle Lösemittel (Aromatengemische mit einem Siedebereich von 185 - 210°C) der Firma Shell bzw. Veba Oel. | | |

Die Umsetzungen werden in 4-Hals-Rundkolben ausgestattet mit Rührer, Rückflußkühler, Innenthermometer, elektrischem Heizbad und gegebenenfalls mit Gaseinleitungsrohr durchgeführt.

Die Bestimmung der K-Werte erfolgte nach Ubbelohde mittels einer 1 Gew.-%igen toluolischen Lösung bei 25°C.

Die Bestimmung der Festkörpergehalte erfolgte durch Trocknung der aus den Umsetzungen anfallenden Lösungen bei 120°C unter reduziertem Druck (200 mbar) über 16 Stunden.

### Beispiel 1

Umsetzungsprodukt eines C_{14/16}-α-Olefin/Maleinsäureanhydrid-Copolymers mit 5 Mol.-% (bezogen auf Maleinsäureanhydrid-Anteil) ®Jeffamine M-1000 und 0,9 Mol-Äquivalenten Dicocosfettamin 83,6 g einer 29,4 Gew.-%igen Maleinsäureanhydrid-C_{14/16}-α-Olefin-Copolymerlösung in ®Shellsol AB (enthaltend 132 mmol Säureanhydridgruppen) wird mit 6,6 g (6,6 mmol) ®Jeffamine M-1000 zwei Stunden bei 140°C gerührt. Nach Abkühlen auf 90°C werden 46,8 g (120 mmol) Dicocosfettamin zugegeben und 3 Stunden bei dieser Temperatur gerührt.

Die resultierende, gelbe Lösung hat einen Festkörpergehalt von 49 % und das nach der Trocknung erhaltene spröde, leicht gelbgefärbte, wachsartige Umsetzungsprodukt hat einen titrierbaren Basenstickstoff von 0,78 %. Der K-Wert beträgt 17.

### Beispiel 2

### Umsetzungsprodukt eines C_{14/16}-α-Olefin/Maleinsäureanhydrid-Copolymers mit 5 Mol-% bezogen auf Maleinsäureanhydrid-Anteil ®Jeffamine M-715 und 1,9 Mol-Äquivalenten Dicocosfettamin

141 g einer 22 %igen Lösung eines Maleinsäureanhydrid-C_{14/16}-α-Olefin-Copolymers (enthaltend 95 mmol Säureanhydridgruppen) in ®Solvent Naphtha und 3,4 g (5 mmol) ®Jeffamine M-715 werden zwei Stunden bei 140°C und nach Zugabe von 69 g (180 mmol) Dicocosfettamin weitere 2 h bei 90°C gerührt.

Die resultierende Lösung hat einen Festkörpergehalt von 48 % und das nach der Trocknung erhaltene spröde, wachsartige Umsetzungsprodukt hat einen titrierbaren Basenstickstoff von 0,72 %.

### Beispiel 3

### Umsetzungsprodukt eines C_{14/16}-α-Olefin/Maleinsäureanhydrid-Copolymers mit 5 Mol.-% bezogen auf Maleinsäureanhydrid-Anteil ®Jeffamine M-600 und 1,9 Mol-Äquivalenten einer Mischung aus Dicocosfettamin und Ditalgfettamin (1:1)

Eine Lösung von 31 g eines Maleinsäureanhydrid-C_{14/16}-α-Olefin-Copolymers (enthaltend 95 mmol Anhydridgruppen) in 110 g ®Solvent Naphtha und 3 g (5 mmol) ®Jeffamine M-600 werden zwei Stunden bei 140°C und nach Zugabe einer Mischung aus 33 g (90 mmol) Dicocosfettamin und 43 g (90 mmol) Ditalgfettamin weitere 2 h bei 90°C gerührt.

Die resultierende Lösung hat einen Festkörpergehalt von 49 %, eine Säurezahl von 22 mg KOH/g. Das nach der Trocknung erhaltene spröde, wachsartige Umsetzungsprodukt hat einen titrierbaren Basenstickstoff von 0,58%.

### Beispiel 4

### Umsetzung eines Maleinsäureanhydrid-C_{14/16}-α-Olefin-Copolymers mit einem Gemisch aus ®Jeffamine M-1000 und Ditalgfettamin

Eine Lösung von 22 g eines Maleinsäureanhydrid-C_{14/16}-α-Olefin-Copolymers (enthaltend 70 mmol Anhydridgruppen) in 100 g ®Solvent Naphtha wird mit einer Mischung aus 14 g (15 mmol) ®Jeffamine M-1000 und 63 g (126 mmol) Ditalgfettamin vier Stunden bei 90°C gerührt.

Die resultierende Lösung hat einen Festkörpergehalt von 50 %, eine Säurezahl von 20 mg KOH/g. Das nach der Trocknung erhaltene spröde, wachsartige Umsetzungsprodukt hat einen titrierbaren Basenstickstoff von 0,58%.

### Beispiel 5

### Umsetzung eines Maleinsäureanhydrid-C_{20/22}-α-Olefin-Copolymers mit einem Äquivalent ®Jeffamine M-1000 und einem Äquivalent Ditalgfettamin

Eine Lösung von 24 g eines Maleinsäureanhydrid-C_{20/22}-α-Olefin-Copolymers (enthaltend 50 mmol Anhydridgruppen) in 100 g ®Solvent Naphtha und 50 g (50 mmol) ®Jeffamine M-1000 werdend drei Stunden bei 90°C gerührt und anschließend mit 25 g (50 mmol) Ditalgfettamin neutralisiert.

Die resultierende Lösung hat einen Festkörpergehalt von 52 %, eine Säurezahl von 13 mg KOH/g. Das nach der Trocknung erhaltene spröde, wachsartige Umsetzungsprodukt hat einen titrierbaren Basenstickstoff von 0,37%.

### Beispiel 6

### Umsetzung eines Maleinsäureanhydrid-C₁₈-α-Olefin-Copolymers mit ®Jeffamine M-715 und Behenylalkohol

Eine Lösung von 48 g eines Maleinsäureanhydrid-C₁₈-α-Olefin-Copolymers (enthaltend 0,13 mol Anhydridgruppen) in 96 g ®Solvent Naphtha wird mit 9,3 g (13 mmol) ®Jeffamine M-715 und 32 g (1000 mmol) Behenylalkohol (®Stenol A, Fa. Henkel) drei Stunden bei 120°C gerührt.

Die resultierende orangefarbene Lösung hat einen Festkörpergehalt von 53 %, eine Säurezahl von 34 mg KOH/g. Das nach der Trocknung erhaltene spröde, wachsartige Umsetzungsprodukt hat keinen titrierbaren Basenstickstoff. Eine IR-Bande bei 1730 cm⁻¹ zeigt die Anwesenheit von Estergruppierungen; Banden bei 1700 cm⁻¹ (Schulter) und 1770 cm⁻¹ belegen die Anwesenheit von Imidgruppierungen.

### Beispiel 7

### Neutralisation der Polymerlösung gemäß Beispiel 4 mit Ditalgfettamin

117 g der Polymerlösung gemäß Beispiel 4 werden mit einer 50 Gew.-%igen Lösung von 40 g (0,08 Mol) Ditalgfettamin in ®Solvent Naphtha versetzt und 1 Stunde bei 60°C gerührt.

### Beispiel 8

### Umsetzung eines Maleinsäureanhydrid-Neodecansäurevinylester-Copolymers mit ®Jeffamine M-715 und Ditalgfettamin

123 g (enthaltend 76 mmol Anhydridgruppen) einer 19 Gew.-%igen Lösung eines Maleinsäureanhydrid-Neodecansäurevinylester-Copolymers in ®Solvent Naphtha werden 3 Stunden bei 90°C mit einer Mischung aus 5,5 g (7,7 mmol) ®Jeffamine M-715 und 72 g (145 mmol) Ditalgfettamin gerührt.

Die resultierende rötlich gefärbte, niedrigviskose Polymerlösung hat einen Feststoffgehalt von 46 Gew.-%. Das nach der Trocknung erhaltene spröde, rötlich gefärbte, wachsartige Umsetzungsprodukt hat einen titrierbaren Basenstickstoff von 0,69%.

### Beispiel 9

### Umsetzung eines Maleinsäureanhydrid-Styrol-Copolymers mit ®Jeffamine M-1000 und Ditalgfettamin

Eine Suspension von 30 g (enthaltend 150 mmol Anhydridgruppen) eines Maleinsäureanhydrid-Styrol-Copolymers in 194 g ®Solvent Naphtha wird mit 30 g (30 mmol) ®Jeffamine M-1000 und 134 g (270 mmol) Ditalgfettamin versetzt und 3 Stunden bei 160°C gerührt. Mit fortschreitender Umsetzung geht die Suspension in eine klare Lösung über.

Die resultierende niedrigviskose Polymerlösung hat einen Feststoffgehalt von 51 Gew.-%. Das nach der Trocknung erhaltene spröde, wachsartige Umsetzungsprodukt hat einen titrierbaren Basenstickstoff von 0,67%. Die Säurezahl beträgt 11 mg KOH/g.

### Beispiel 10

### Herstellung eines Maleinsäure-halbamids mit ®Jeffamine M-600

29,4 g (0,3 Mol) Maleinsäureanhydrid und 180 g(0,3 Mol) ®Jeffamine M-600 (9 PO, 1EO; MW ca. 600 g/Mol) werden 4 h in 209 g Toluol unter Rückfluß gekocht. Nach Abziehen des Lösemittels im Vakuum resultiert ein gelbes Öl. Das Produkt hat einen Basenstickstoff von 0,23 % sowie eine Säurezahl von 67,4 mg KOH/g (Halbamid).

### Beispiel 11

### Herstellung eines Imids aus Maleinsäureanhydrid und ®Jeffamine M-715

27 g (0,275 Mol) Maleinsäureanhydrid und 179 g (0,25 Mol) ®Jeffamine M-715 werden unter Zusatz von 0,4 g hypophosphoriger Säure und Durchleiten eines schwachen Stickstoffstroms 6 h bei 180°C gerührt. Das resultierende Produkt hat eine Säurezahl von 26 mg KOH/g; IR-Banden bei 1700 und 1770 cm⁻¹ belegen die Bildung eines Carbonsäureimids.

### Beispiel 12

### Herstellung eines Copolymers aus C_{14/16}-α-Olefin und Maleinsäurehalbamid nach Beispiel 10

Zu einer Lösung von 27 g (0,14 Mol) Tetradecen und 31 g (0,14 Mol) Hexadecen in 159 g ®Solvent Naphtha werden unter Durchleiten von Stickstoff bei 160°C gleichzeitig aus zwei Dosiertrichtern
a) eine Starter-Lösung bestehend aus 2 g Di-tert.-butylperoxid in 8 g ®Solvent Naphtha und
b) 110 g (0,2 Mol) Maleinsäure-polyethermonoamid nach Beispiel 10 über einen Zeitraum von 2 Stunden kontinuierlich zudosiert. Es wird eine Stunde bei 160°C nachgerührt.

Die resultierende Polymerlösung hat einen Feststoffgehalt von 44 Gew.-%. Sie enthält keinen Basenstickstoff; IR-Banden bei 1700 und 1770 cm⁻¹ belegen die Anwesenheit von Imidgruppierungen. Der K-Wert des Polymers (1 %ig in Toluol; nach Ubbelohde) ist 14.

### Beispiel 13

### Terpolymer aus C₁₈-α-Olefin, C₁₈-Maleinimid und Maleinsäure-Polyetherimid nach Beispiel 11

Eine Mischung aus 17 g (0,02 Mol) Polyetherimid gemäß Beispiel 12, 70 g (0,19 Mol) N-Octadecylmaleinimid und 74 g (0,29 Mol) 1-Octadecen wird unter Durchleiten von Stickstoff auf 160°C erwärmt. Bei dieser Temperatur wird eine Starterlösung aus 1,8 g Di-tert.-butylperoxid in 44 g ®Solvent Naphtha zugegeben. Nach Abklingen der exothermen Reaktion wird eine Stunde bei 160°C nachgerührt.

Die resultierende Lösung hat einen Festkörpergehalt von 58 %. Das nach der Trocknung erhaltene spröde, wachsartige Umsetzungsprodukt hat einen K-Wert von 16.

### Beispiel 14

### Umsetzung eines Copolymers aus C_{20/22}-α-Olefin und Maleinsäureanhydrid mit Monoethanolamin und anschließende Oethylierung

### 1. Stufe:

Zu einer Lösung von 27,4 g (0,45 mol) Ethanolamin in 109,5 g Solvent Naphtha werden bei 90°C im Laufe einer Stunde 363 g einer Lösung von 218 g eines Maleinsäureanhydrid-C_{20/22}-Copolymers (enthaltend 0,45 mol Anhydridgruppen) in 145 g Solvent Naphtha gegeben. Anschließend wird auf 160°C erhitzt und sich bildendes Reaktionswasser unter Durchleiten eines schwachen Stickstoffstroms im Laufe von 1,5 Stunden abdestilliert.

Die Säurezahl der resultierenden 54 gew.-%igen Polymerlösung beträgt 3 mg KOH/g; es ist kein titrierbarer Basenstickstoff vorhanden. Das IR-Spektrum zeigt eine für Imide charakteristische intensive Bande bei 1690 cm⁻¹.

### 2. Stufe:

213 g der obigen Polymerlösung (enthaltend 0,2 mol Hydroxylgruppen) werden in einem mit Rührer versehenen Autoklaven bei 60°C mit 0,58 g Natriummethylat versetzt. Das sich bildende Methanol wird binnen einer Stunde im Vakuum abdestilliert.

Anschließend werden im Laufe von 30 Minuten bei 95 bis 110°C und einem Druck von max. 3,6 bar, 44 g (1 mol) Ethylenoxid zudosiert. Es wird eine Stunde bei 100°C nachgerührt und nach Abkühlen auf 60°C restliches Ethylenoxid im Vakuum abgezogen.

Es resultiert eine 61 %ige, rotbraune Polymerlösung mit K-Wert von 15. Die Isolierung des Umsetzungsproduktes erfolgte wie zuvor beschrieben.

| Anwendungsbeispiele : | | | |
|---|---|---|---|
| | Mitteldestillat 1 | Mitteldestillat 2 | Mitteldestillat 3 |
| Trübungspunkt (°C) (Cloudpoint CP) | - 8 | - 8 | - 9 |
| CFPP (°C) | - 10 | - 8 | - 12 |
| Dichte/20°C/ (g/ml) | 0,837 | 0,822 | 0,853 |
| Siedeanfang (°C) | 183 | 173 | 168 |
| 20 % Siedepunkt (°C) | 225 | 221 | 216 |
| 90 % Siedepunkt (°C) | 338 | 333 | 315 |
| Siedeende (°C) | 361 | 358 | 345 |

Schlüssel: Fließverbesserer
- Fl(A) =: Ethylen/Vinylacetat/Vesaticsäure-vinylester Copolymer (mit ca. 31 % Vinylacetat), Schmelzviskosität (V₁₄₀) von ca. 110 mPas
- Fl(B) =: Ethylen/Vinylacetat-Copolymer (mit ca. 32 % Vinylacetat), mittleres Molekulargewicht ca. 1500
- QAS :: N-Methyl-triethanolammonium-distearylester-methosulfat

Schlüssel: Dispergator
- PD1 =: Beispiel 2
- PD2 =: Beispiel 1
- PD3 =: Beispiel 4
- PD4 =: Beispiel 3
- PD5 =: Beispiel 1
- PD6 =: Beispiel 7
- PD7 =: Beispiel 8
- PD8 =: Beispiel 9
- PD9 =: Beispiel 12

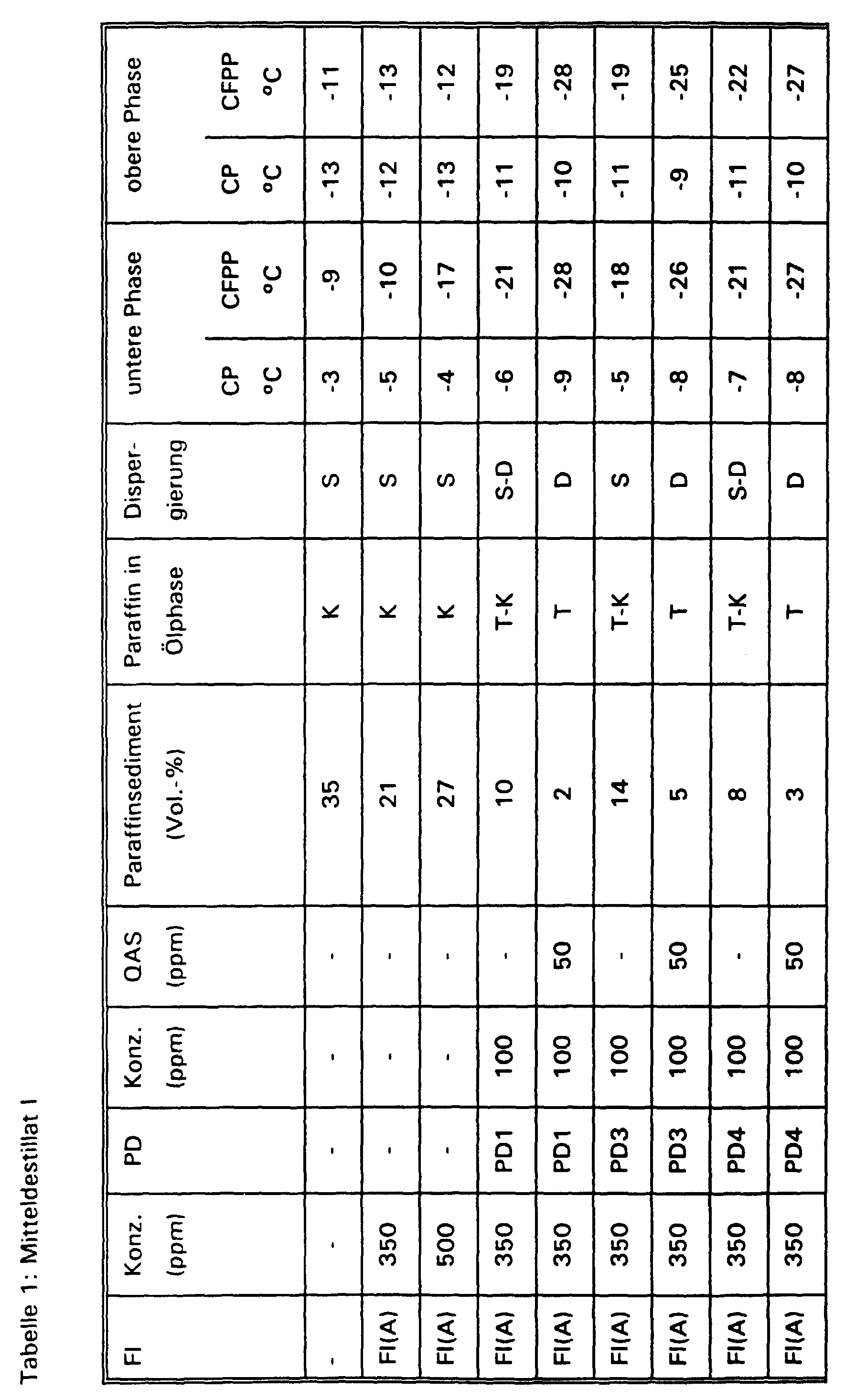

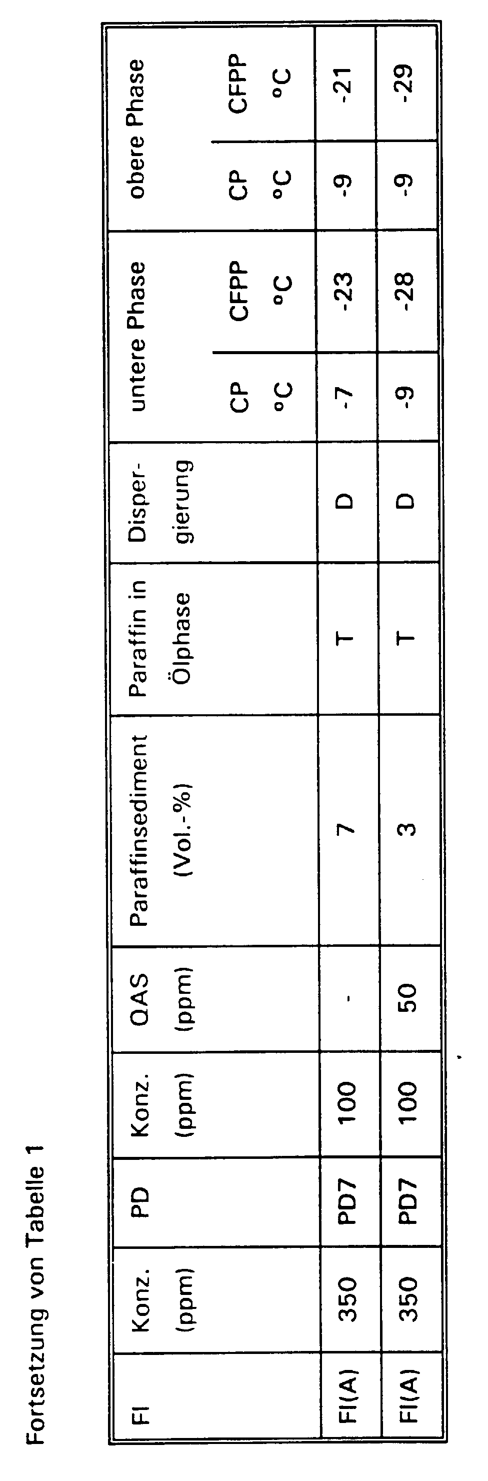

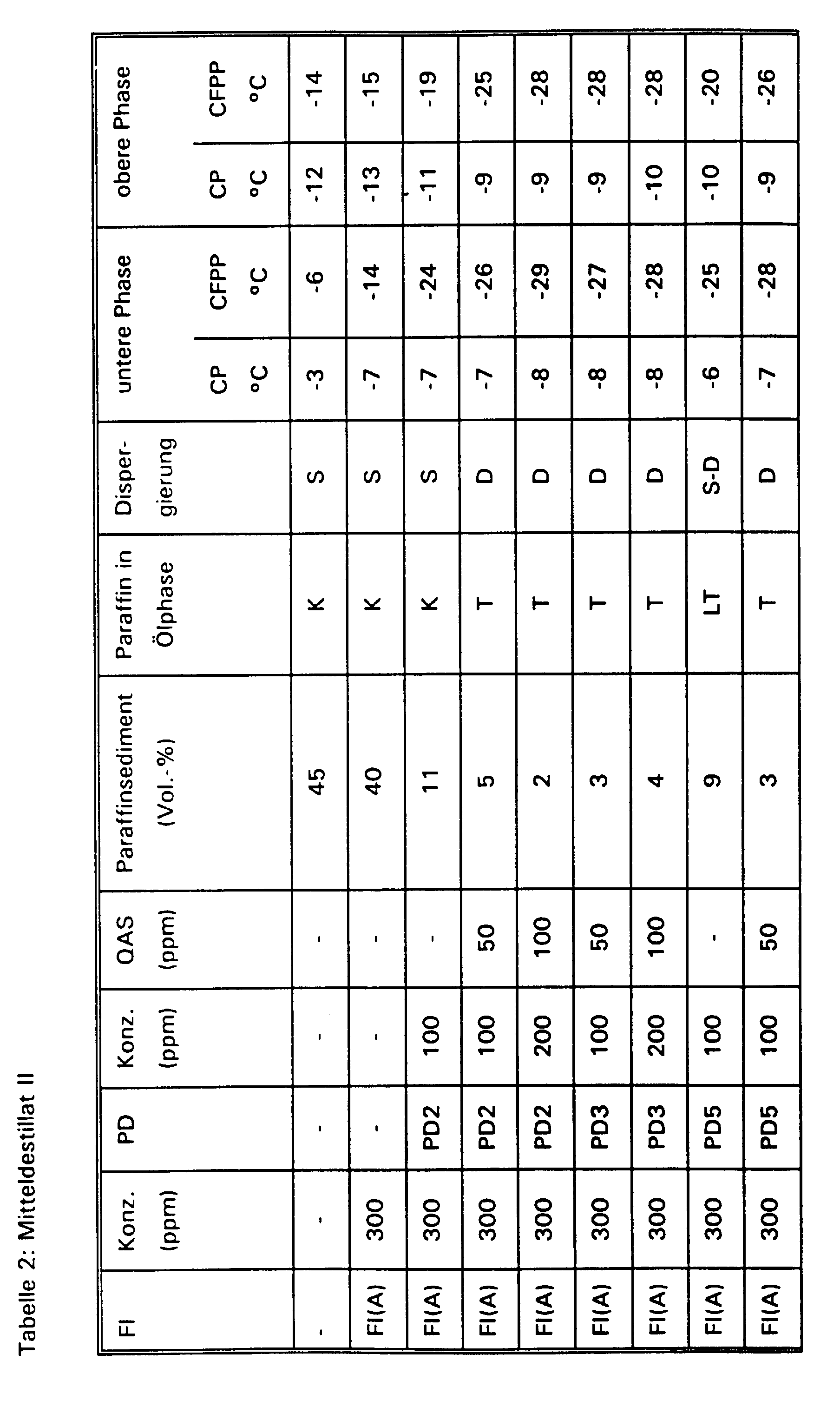

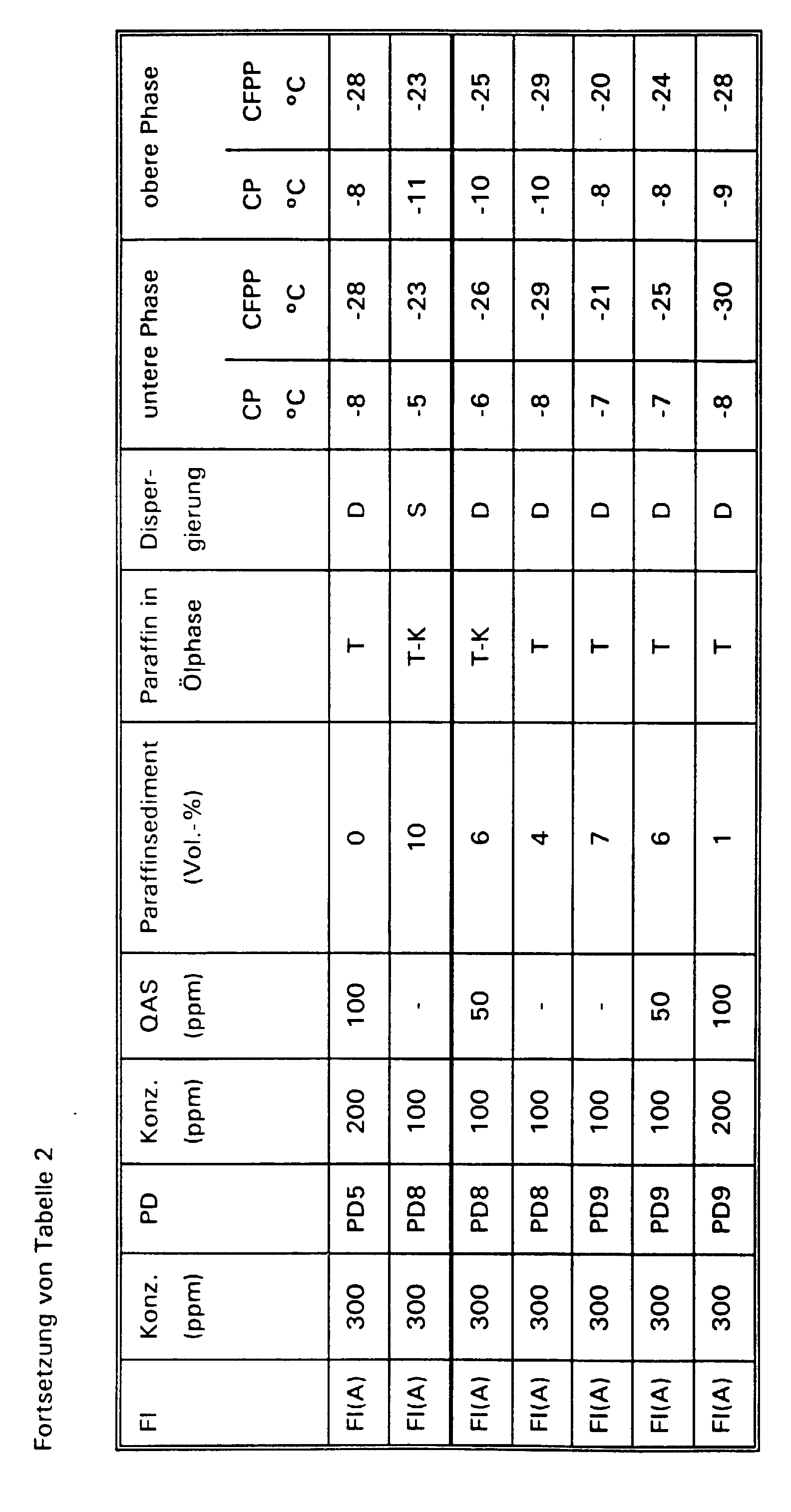

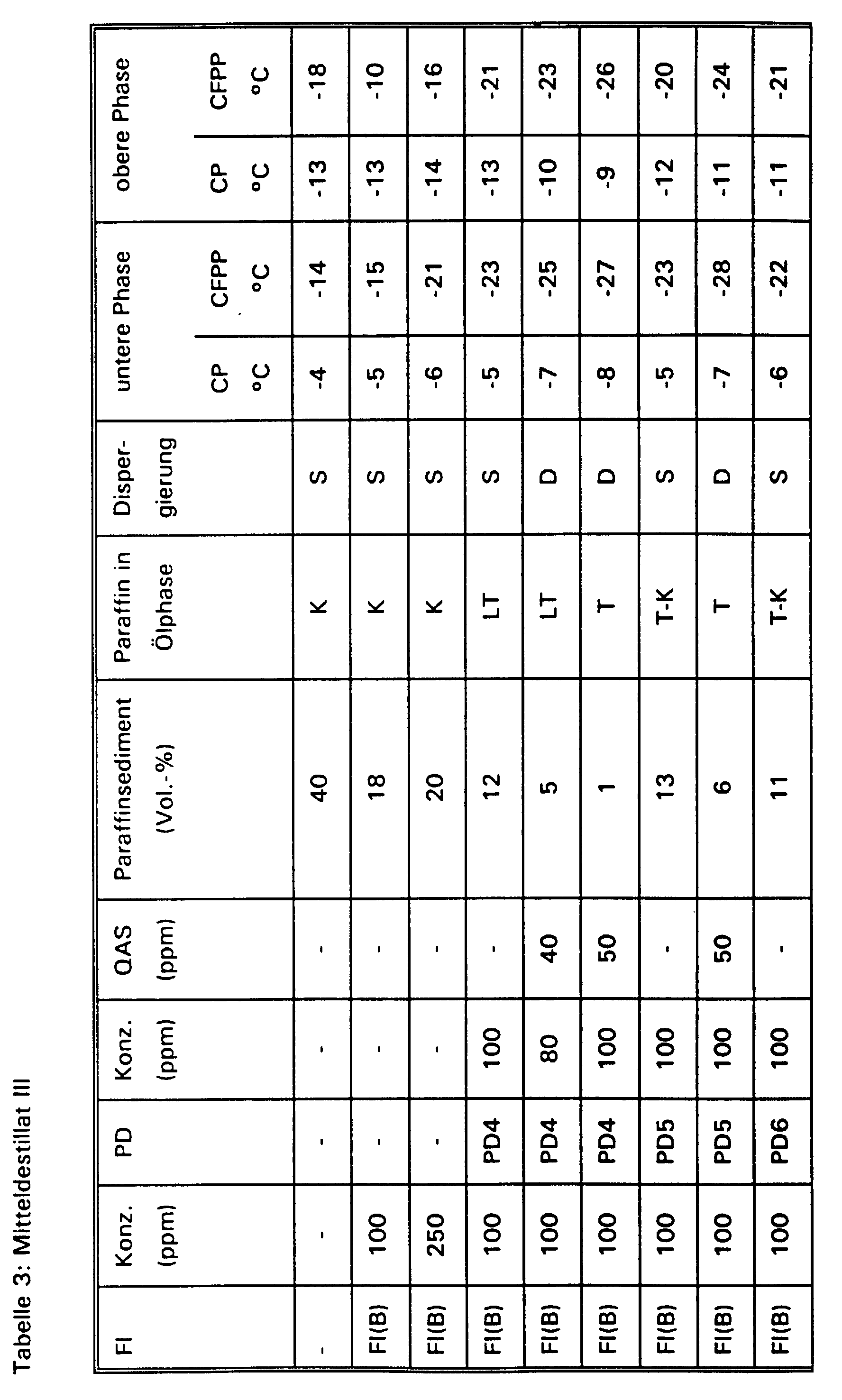

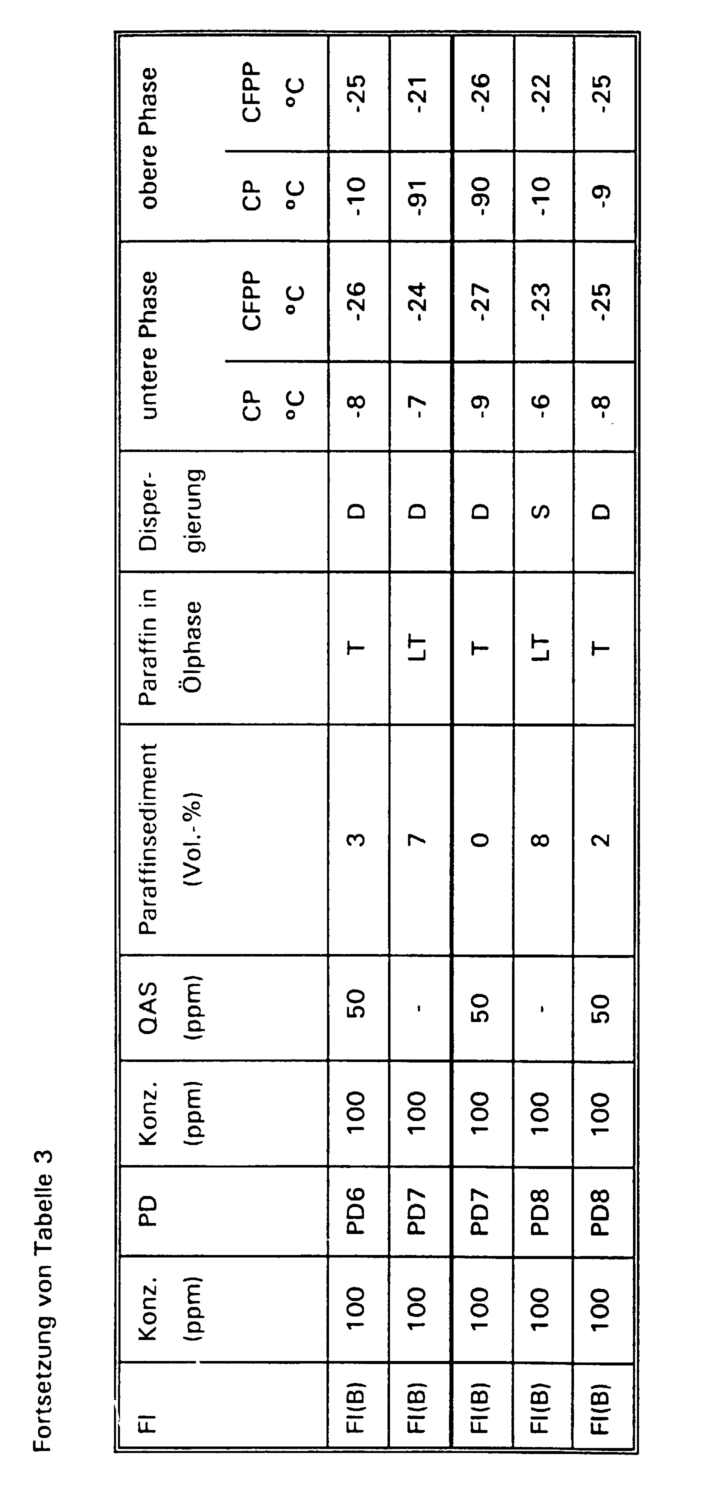

Es bedeuten:
- K =: klar
- T =: trüb
- LT =: leichttrüb
- S =: Sediment
- D =: dispergiert

## Patentansprüche

1. Umsetzungsprodukte von Polyetheraminen mit Dicarbonsäureanhydridgruppen enthaltenden Polymeren , dadurch gekennzeichnet, daß sie 20 - 80, bevorzugt 40 - 60 Mol.-% an bivalenten Struktureinheiten A und/oder C und gegebenenfalls B 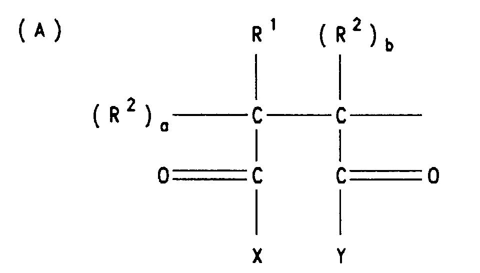 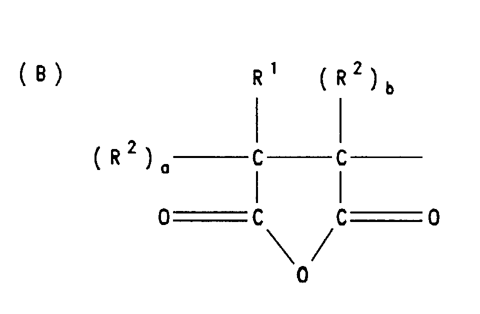 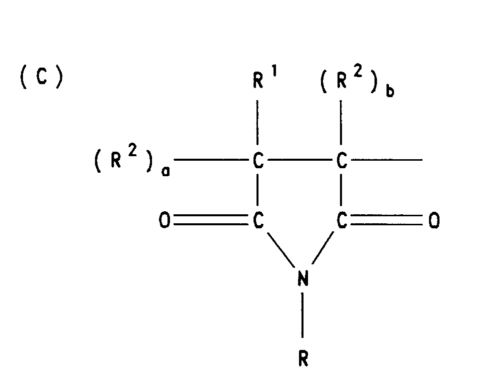 wobei
R¹ und R² unabhängig voneinander Wasserstoff, Methyl oder Methylen,
a, b gleich Null oder Eins und a + b gleich Eins,
X und Y unabhängig voneinander -OH, -O-C₁-C₃₀-Alkyl, NR³R⁴, -O^{⊖}N^{⊕}H₂R³R⁴
R³ und R⁴ unabhängig voneinander Wasserstoff, C₆-C₄₀-Alkyl oder R,
R 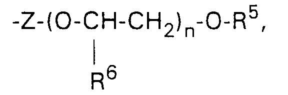 mit der Maßgabe, daß mindestens 1 mol-% der polymergebundenen Säureanhydridgruppen mit einem Polyetheramin der Formel H umgesetzt ist, 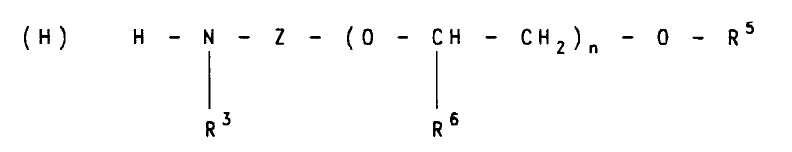
Z C₂-C₄-Alkylen,
n eine Zahl zwischen 1 und 1000
R⁵ C₁-C₃₀-Alkyl, C₅-C₁₂-Cycloalkyl oder C₆-C₃₀-Aryl,
R⁶ Wasserstoff, C₁-C₄-Alkyl, bevorzugt Methyl
bedeuten, und
80 - 20 Mol.-%, bevorzugt 60 - 40 Mol.-% an bivalenten Struktureinheiten D 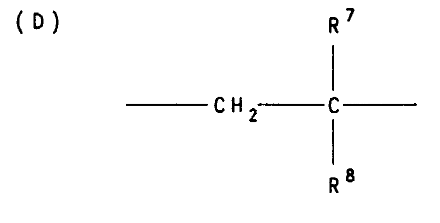 worin
R⁷ Wasserstoff oder C₁-C₄-Alkyl ist und
R⁸ C₁-C₆₀-Alkyl oder C₆-C₁₈-Aryl bedeutet, enthalten.

2. Mischung bestehend aus mindestens einem Umsetzungsprodukt nach Anspruch 1 und mindestens einem Ethylen-Vinylester-Copolymeren.

3. Mischung nach Anspruch 2, dadurch gekennzeichnet, daß sie Ethylen-Vinylester-Copolymere enthalten, die sich von Copolymeren ableiten, die C1-C20-Alkylvinylester, Vinylester von gesättigten C₁₀-C₂₄-Fettsäuren, Ester ungesättigter Carbonsäuren, Diisobutylen, Dimethylvinylcarbinol und Methoxyessigsäurevinylester als Monomere enthalten.

4. Mischung nach Anspruch 2 oder 3, dadurch gekennzeichnet, daß die Ethylen-Vinylester-Copolymeren 80 - 51 Gew.-% Ethylen, 20 - 49 Gew.-% Vinylacetat oder Vinylpropionat, enthalten.

5. Mischung nach Anspruch 2 oder 3, dadurch gekennzeichnet, daß die Ethylen-Vinylester-Copolymeren 79 - 40 Gew.-% Ethylen, 20 - 35 Gew.-% Vinylacetat oder Vinylpropionat und 1 - 25 Gew.-% Diisobutylen, Neononansäurevinylester oder Neodecansäurevinylester enthalten.

6. Mischung nach Anspruch 2 oder 3, dadurch gekennzeichnet, daß die Ethylen-Vinylester-Copolymeren 79-40 Gew.-% Ethylen, 1-15 Gew.-% Vinylacetat oder Vinylpropionat und 1-15 Gew.-% Diisobutylen, Neononansäurevinylester oder Neodecansäurevinylester enthalten.

7. Mischung bestehend aus einer Mischung nach einem der Ansprüche 2 bis 6 und mindestens einem quartärem Ammoniumsalz der Formel
^{⊕}N(R¹¹)₄ U^{⊖}
worin
R¹¹ C₁-C₃₀-Alkyl, C₂-C₃₀-Alkenyl, Benzyl oder einen Rest der Formel -(CH₂-CH₂-O)ₙ-R¹² bedeutet, wobei
R¹² Wasserstoff oder einen Fettsäurerest der Formel C(O)-R¹³ bedeutet, wobei
R¹³ C₆-C₄₀-Alkyl oder C₆-C₄₀-Alkenyl ist,
n eine Zahl von 1 bis 30 ist und
U für ein Halogen oder Methosulfat steht.

8. Mischung gemäß Anspruch 7, worin
R¹¹ C₁-C₂₂-Alkyl oder C₂-C₂₂-Alkenyl bedeutet und
U für Methosulfat steht.

9. Verwendung von Mischungen nach einem der Ansprüche 2 bis 8 als Paraffindispergatoren in Erdölmitteldestillaten.

10. Verwendung von Mischungen nach einem der Ansprüche 2 bis 8 zur Absenkung des Trübungspunktes (cloud point) in Erdölmitteldestillaten.

11. Verwendung nach Anspruch 9 oder 10, dadurch gekennzeichnet, daß man eine Mischung bestehend aus 10 bis 1000 ppm an Umsetzungsprodukt und 100 bis 10000 ppm an Ethylen-Vinylester-Copolymeren dem paraffinhaltigen Erdölmitteldestillat zusetzt.

12. Verwendung nach Anspruch 9 oder 10, dadurch gekennzeichnet, daß man eine Mischung bestehend aus 50 bis 500 ppm an Umsetzungsprodukt und 50 bis 1000 ppm an Ethylen-Vinylester-Copolymeren dem paraffinhaltigen Erdölmitteldestillat zusetzt.

13. Paraffinhaltige Erdölmitteldestillate enthaltend Mischungen nach einem der Ansprüche 2 bis 8.

14. Verwendung nach Anspruch 11 oder 12, dadurch gekennzeichnet, daß man eine Mischung bestehend aus 10 bis 1000 ppm an Umsetzungsprodukt nach Anspruch 1, 10 bis 10000 ppm an Ethylen-Vinylester-Copolymeren und 10 bis 1000 ppm an quartärem Ammoniumsalz der Formel ^{⊕}N(R¹¹)₄ U^{⊖} dem paraffinhaltigen Erdölmitteldestillat zusetzt.

15. Verwendung nach Anspruch 11 oder 12, dadurch gekennzeichnet, daß man eine Mischung bestehend aus 50 bis 500 ppm an Umsetzungsprodukt nach Anspruch 1, 50 bis 1000 ppm an Ethylen-Vinylester-Copolymeren und 50 bis 500 ppm an quartärem Ammoniumsalz der Formel ^{⊕}N(R¹¹)₄ U^{⊖} dem paraffinhaltigen Erdölmitteldestillat zusetzt.

## Claims

1. A reaction product of a polyetheramine with a polymer containing dicarboxylic anhydride groups, which contains 20 - 80, preferably 40 - 60, mol % of bivalent structural units A and/or C and, if required, B 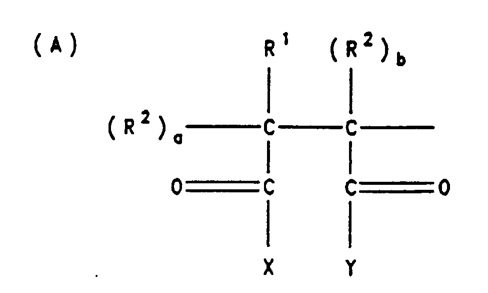 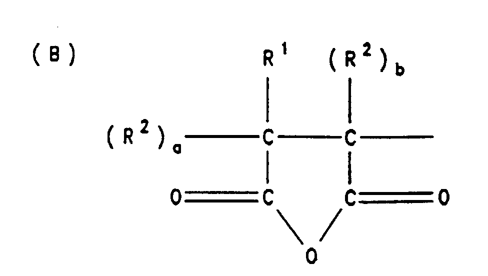 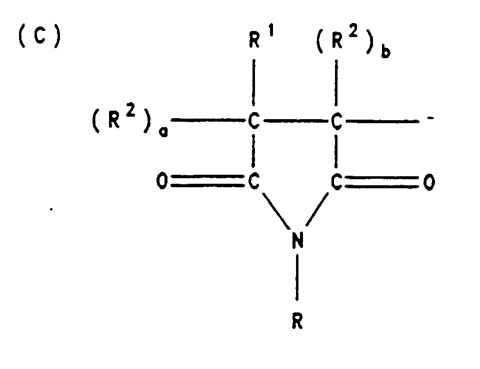 in which
R¹ and R², independently of one another, are hydrogen, methyl or methylene,
a and b are equal to zero or one and a + b is equal to one,
X and Y, independently of one another, are -OH, -O-C₁-C₃₀-alkyl, NR³R⁴ or -O^{⊖}N^{⊕}H₂R³R⁴,
R³ and R⁴, independently of one another, are hydrogen, C₆-C₄₀-alkyl or R,
R is 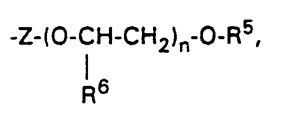 with the proviso that at least 1 mol % of the acid anhydride groups bonded to the polymer have reacted with a polyetheramine of the formula H, 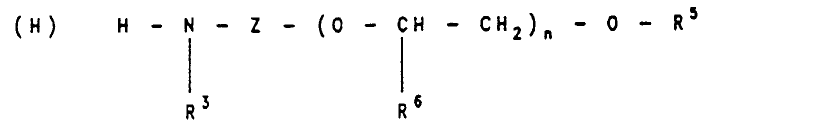
Z is C₂-C₄-alkylene,
n is a number from 1 to 1000,
R⁵ is C₁-C₃₀-alkyl_{'} C₅-C₁₂-cycloalkyl or C₆-C₃₀-aryl and
R⁶ is hydrogen or C₁-C₄-alkyl, preferably methyl,
and
80 - 20 mol %, preferably 60 - 40 mol %, of bivalent structural units D 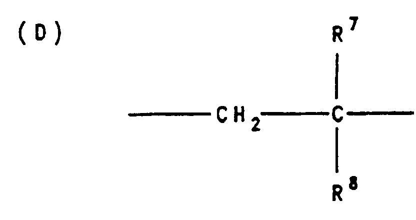 in which
R⁷ is hydrogen or C₁-C₄-alkyl and
R⁸ is C₁-C₆₀-alkyl or C₆-C₁₈-aryl.

2. A mixture comprising at least one reaction product as claimed in claim 1 and at least one ethylene/ vinyl ester copolymer.

3. The mixture as claimed in claim 2, which contains ethylene/vinyl ester copolymers which are derived from copolymers which contain C₁-C₂₀-alkyl vinyl esters, vinyl esters of saturated C₁₀-C₂₄-fatty acids, esters of unsaturated carboxylic acids, diisobutylene, dimethylvinylcarbinol and vinyl methoxyacetate as monomers.

4. The mixture as claimed in claim 2 or 3, wherein the ethylene/vinyl ester copolymers contain 80 - 51% by weight of ethylene and 20 - 49% by weight of vinyl acetate or vinyl propionate.

5. The mixture as claimed in claim 2 or 3, wherein the ethylene/vinyl ester copolymers contain 79 - 40% by weight of ethylene, 20 - 35% by weight of vinyl acetate or vinyl propionate and 1 - 25% by weight of diisobutylene, vinyl neononanoate or vinyl neodecanoate.

6. The mixture as claimed in claim 2 or 3, wherein the ethylene/vinyl ester copolymers contain 79-40% by weight of ethylene, 1-15% by weight of vinyl acetate or vinyl propionate and 1-15% by weight of diisobutylene, vinyl neononanoate or vinyl neodecanoate.

7. A mixture comprising a mixture as claimed in any of claims 2 to 6 and at least one quaternary ammonium salt of the formula
^{⊕}(R¹¹)₄U^{⊖}
in which
R¹¹ is C₁-C₃₀-alkyl, C₂-C₃₀-alkenyl, benzyl or a radical of the formula -(CH₂-CH₂-O)ₙ-R¹², in which
R¹² is hydrogen or a fatty acid radical of the formula C(O)-R¹³, in which
R¹³ is C₆-C₄₀-alkyl or C₆-C₄₀-alkenyl,
n is a number from 1 to 30 and
U is a halogen or methosulfate.

8. The mixture as claimed in claim 7, in which
R¹¹ is C₁-C₂₂-alkyl or C₂-C₂₂-alkenyl and
U is methosulfate.

9. The use of mixtures as claimed in any of claims 2 to 8 as paraffin dispersants in mineral oil middle distillates.

10. The use of mixtures as claimed in any of claims 2 to 8 for reducing the cloud point in mineral oil middle distillates.

11. The use as claimed in claim 9 or 10, wherein a mixture comprising from 10 to 1000 ppm of reaction product and from 100 to 10,000 ppm of ethylene/vinyl ester copolymers is added to the paraffin-containing mineral oil middle distillate.

12. The use as claimed in claim 9 or 10, wherein a mixture comprising from 50 to 500 ppm of reaction product and from 50 to 1000 ppm of ethylene/vinyl ester copolymers is added to the paraffin-containing mineral oil middle distillate.

13. A paraffin-containing mineral oil middle distillate containing a mixture as claimed in any of claims 2 to 8.

14. The use as claimed in claim 11 or 12, wherein a mixture comprising from 10 to 1000 ppm of reaction product as claimed in claim 1, from 10 to 10,000 ppm of ethylene/vinyl ester copolymers and from 10 to 1000 ppm of quaternary ammonium salt of the formula ^{⊕} N(R¹¹)₄U^{⊖} is added to the paraffin-containing mineral oil middle distillate.

15. The use as claimed in claim 11 or 12, wherein a mixture comprising from 50 to 500 ppm of reaction product as claimed in claim 1, from 50 to 1000 ppm of ethylene/vinyl ester copolymers and from 50 to 500 ppm of quaternary ammonium salt of the formula ^{⊕}N(R¹¹)₄U^{⊖} is added to the paraffin-containing mineral oil middle distillate.

## Revendications

1. Produits de réaction de polyéther-amines avec des polymères contenant des groupes anhydride d'acide dicarboxylique, caractérisés en ce qu'ils contiennent 20 - 80, de préférence 40 - 60% en mole de motifs de structure bivalents A et/ou C et éventuellement B 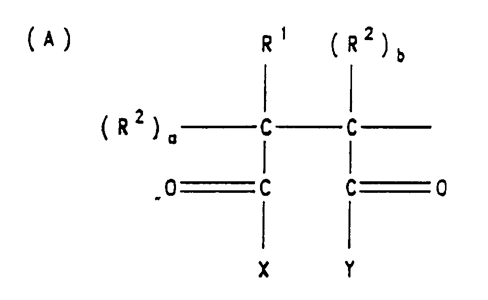 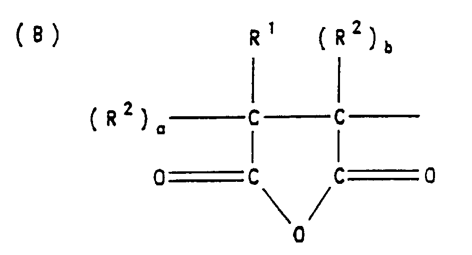 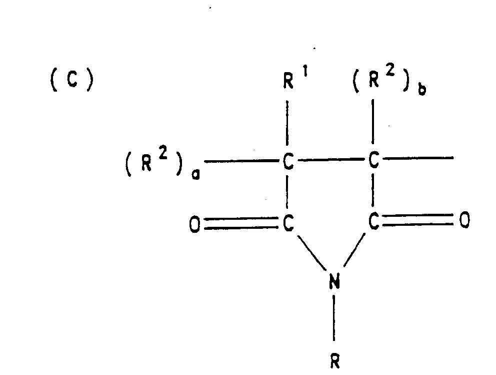 dans lesquelles
R¹ et R² représentent indépendamment l'un de l'autre un atome d'hydrogène, un groupe méthyle ou méthylène,
a, b sont égaux à zéro ou un et a + b est égal à un,
X et Y représentent indépendamment l'un de l'autre -OH, -O-(alkyle en C₁-C₃₀), NR³R⁴ ou -O^{⊖}N^{⊕}H₂R³R⁴,
R³ et R⁴ représentent indépendamment l'un de l'autre un atome d'hydrogène, un groupe alkyle en C₆-C₄₀ ou R,
R représente 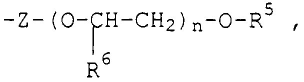 avec la caractéristique qu'au moins 1% en mole des groupes anhydride d'acide liés au polymère ait réagi avec une polyéther-amine de formule H, 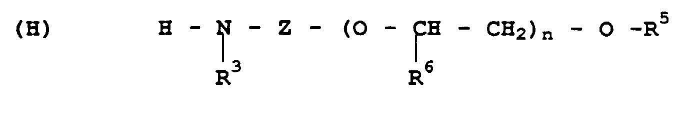
Z représente un groupe alkylène en C₂-C₄,
n un nombre entre 1 et 1000,
R⁵ représente un groupe alkyle en C₁-C₃₀, cycloalkyle en C₅-C₁₂ ou aryle en C₆-C₃₀,
R⁶ représente un atome d'hydrogène, un groupe alkyle en C₁-C₄, de préférence un groupe méthyle,
et
80 - 20 % en mole, de préférence 60 - 40% en mole de motifs structuraux bivalents D 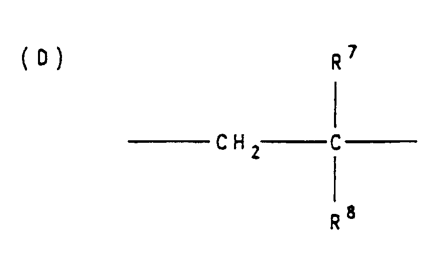 formule dans laquelle
R⁷ est un atome d'hydrogène ou un groupe alkyle en C₁-C₄ et
R⁸ représente un groupe alkyle en C₁-C₆₀ ou aryle en C₆-C₁₈.

2. Mélange constitué d'au moins un produit de réaction selon la revendication 1 et d'au moins un copolymère éthylène-ester de vinyle.

3. Mélange selon la revendication 2, caractérisé en ce qu'il contient des copolymères éthylène-ester de vinyle, qui dérivent de copolymères, qui contiennent comme monomères des esters alkylvinyliques en C₁-C₂₀, des esters de vinyle d'acides gras saturés en C₁₀-C₂₄, des esters d'acides carboxyliques insaturés, le diisobutylène, le diméthyldivinylcarbinol et le méthoxyacétate de vinyle.

4. Mélange selon la revendication 2 ou 3, caractérisé en ce les copolymères éthylène-ester de vinyle contiennent 80 - 51% en poids d'éthylène, 20 - 49% en poids d'acétate de vinyle ou de propionate de vinyle.

5. Mélange selon la revendication 2 ou 3, caractérisé en ce les copolymères éthylène-ester de vinyle contiennent 79 - 40% en poids d'éthylène, 20 - 35% en poids d'acétate de vinyle ou de propionate de vinyle et 1 - 25% en poids de diisobutylène, de néononanecarboxylate de vinyle ou de néodécanecarboxylate de vinyle.

6. Mélange selon la revendication 2 ou 3, caractérisé en ce les copolymères éthylène-ester de vinyle contiennent 79 - 40% en poids d'éthylène, 1 - 15% en poids d'acétate de vinyle ou de propionate de vinyle et 1 - 15% en poids de diisobutylène, de néononanecarboxylate de vinyle ou de néodécanecarboxylate de vinyle.

7. Mélange constitué d'un mélange selon l'une des revendications 2 à 6 et d'au moins un sel d'ammonium quaternaire de formule
^{⊕}N(R¹¹)₄ U^{⊖}
dans laquelle
R¹¹ représente un groupe alkyle en C₁-C₃₀, alcényle en C₂-C₃₀, benzyle ou un groupe de formule - (CH₂-CH₂-O)ₙ-R¹², dans laquelle
R¹² est un atome d'hydrogène ou un groupe acide gras de formule C(O)-R¹³, dans laquelle
R¹³ est un groupe alkyle en C₆-C₄₀ ou alcényle en C₆-C₄₀,
n est un nombre de 1 à 30 et
U représente un atome d'halogène ou un groupe méthosulfate.

8. Mélange selon la revendication 7, dans lequel
R¹¹ représente un groupe alkyle en C₁-C₃₀ ou alcényle en C₂-C₂₂ et
U représente un groupe méthosulfate.

9. Utilisation de mélanges selon l'une des revendications 2 à 8 comme agents dispersants de la paraffine dans des distillats de produits pétroliers.

10. Utilisation de mélanges selon l'une des revendications 2 à 8 pour abaisser le point de trouble (cloud point) dans des distillats de produits pétroliers.

11. Utilisation selon la revendication 9 ou 10, caractérisé en ce que l'on ajoute au distillat de produits pétroliers paraffineux un mélange constitué de 10 à 1000 ppm de produit de réaction et de 100 à 10000 ppm de copolymères éthylène-ester de vinyle.

12. Utilisation selon la revendication 9 ou 10, caractérisé en ce que l'on ajoute au distillat de produits pétroliers paraffineux un mélange constitué de 50 à 500 ppm de produit de réaction et de 50 à 1000 ppm de copolymères éthylène-ester de vinyle.

13. Distillats de produits pétroliers paraffineux contenant des mélanges selon l'une des revendications 2 à 8.

14. Utilisation selon la revendication 11 ou 12, caractérisé en ce que l'on ajoute au distillat de produits pétroliers paraffineux un mélange constitué de 10 à 1000 ppm de produit de réaction selon la revendication 1, de 10 à 10000 ppm de copolymères éthylène-ester de vinyle et de 10 à 1000 ppm de sel d'ammonium quaternaire de formule ^{⊕}N(R¹¹)₄ U^{⊖}.

15. Utilisation selon la revendication 11 ou 12, caractérisé en ce que l'on ajoute au distillat de produits pétroliers paraffineux un mélange constitué de 50 à 500 ppm de produit de réaction selon la revendication 1, de 50 à 1000 ppm de copolymères éthylène-ester de vinyle et de 50 à 500 ppm de sel d'ammonium quaternaire de formule ^{⊕} N(R¹¹)₄ U^{⊖}.
